# FASCICULE DE BREVET EUROPEEN

(11) **EP 0 648 457 B1**
(45) Date de publication et mention de la délivrance du brevet: **03.12.1997**
(21) Numéro de dépôt: 94420267.0
(22) Date de dépôt: 04.10.1994
(51) Int. Cl.: A47J 27/04

(54) **Four muni d'un dispositif de traitement de l'excès de vapeur**
Ofen mit Vorrichtung zur Behandlung von überschüssigem Dampf
Oven comprising a device for treating the excess vapor

(30) Priorité: 12.10.1993 FR 9312381
(43) Date de publication de la demande: 19.04.1995
(73) Titulaire: SOCIETE COOPERATIVE DE PRODUCTION BOURGEOIS (Société Coopérative de Production Anonyme à Capital Variable), 74210 Faverges (FR)
(72) Inventeur: Violi, Raymond, F-74210 Marlens (FR)
(74) Mandataire: Poncet, Jean-François

(56) Documents cités:
- EP-A- 0 092 851
- EP-A- 0 388 751
- DE-A- 3 516 847
- FR-A- 378 963
- FR-A- 2 171 876
- FR-A- 2 458 260
- GB-A- 2 176 695
- GB-A- 2 218 328

## Description

La présente invention concerne les fours pour la cuisson d'aliments, comprenant une enceinte étanche munie d'une ouverture obturée par une porte, éventuellement avec un dispositif de génération de vapeur d'eau et des canalisations pour amener dans l'enceinte étanche la vapeur produite par le dispositif de génération de vapeur d'eau. GB-A-2 176 695 divulgue un four selon le préambule de la revendication 1.

Les fours à vapeur habituellement utilisés présentent l'avantage d'une cuisson plus rapide en atmosphère humide.

Il est nécessaire de contrôler la quantité de vapeur produite au cours de la cuisson, pour maintenir la pression de vapeur à un niveau suffisamment élevé pour une bonne cuisson, et à un niveau suffisamment faible pour éviter une sortie trop importante de vapeur dans l'atmosphère ambiante. Il s'avère toutefois que la régulation de production de vapeur est difficile, notamment à cause de l'inertie du dispositif de génération de vapeur. Il en résulte que, dans les fours à vapeur habituellement utilisés, de la vapeur s'échappe soit par les canalisations d'écoulement d'eau, soit dans l'atmosphère par une canalisation d'échappement de vapeur prévue à cet effet. L'échappement de vapeur pollue l'atmosphère, notamment en produisant une augmentation inacceptable de l'humidité ambiante, et en produisant des brouillards et des gouttelettes d'eau. L'échappement de vapeur par les canalisations d'écoulement d'eau nécessite un raccordement étanche dont la réalisation est délicate, il échauffe exagérément les canalisations en provoquant leur vieillissement prématuré, et il perturbe certains écoulements et est donc à éviter.

L'échappement de vapeur se produit également dans les fours dépourvus de générateur de vapeur, lors de la cuisson d'aliments à forte teneur en eau.

Le problème proposé par la présente invention est à la fois d'empêcher ou de limiter très sensiblement la sortie de vapeur du four dans les canalisations d'écoulement d'eau reliées aux égouts, et d'éviter que la sortie de vapeur du four dans l'atmosphère ambiante provoque des condensations sur les parois du local où est placé le four.

On cherche en outre à favoriser l'évacuation ou l'élimination des graisses et condensats qui sortent de l'enceinte du four.

Pour atteindre ces objets ainsi que d'autres, le four selon l'invention comprend une enceinte étanche munie d'une ouverture obturée par une porte, avec des moyens de captage d'eau condensée pour recueillir en partie basse de l'enceinte l'eau qui se condense dans l'enceinte et pour l'évacuer dans des canalisations d'écoulement, un circuit de conduction d'excès de vapeur pour capter l'excès de vapeur sortant de l'enceinte et pour amener la vapeur captée jusqu'à des moyens de traitement comportant des moyens de condensation de vapeur pour la transformer en condensats liquides, des moyens pour recueillir les condensats liquides et pour les évacuer dans les canalisations d'écoulement. Selon l'invention les moyens pour recueillir et traiter l'excès de vapeur sont distincts des moyens pour recueillir l'eau condensée et comprennent un orifice supérieur ménagé dans la partie supérieure d'enceinte et raccordé à une canalisation de conduction d'excès de vapeur pour conduire l'excès de vapeur prélevé en partie supérieure d'enceinte jusqu'à un orifice de raccordement ménagé dans une boîte de condensation placée dans la zone inférieure du four. les moyens de traitement comportent en outre au moins un surchauffeur, adapté pour assurer un échauffement important de la vapeur qui le traverse, et placé dans le circuit de conduction d'excès de vapeur en amont ou en aval des moyens de condensation de vapeur.

Le surchauffeur peut avantageusement être adapté pour chauffer la vapeur qui le traverse à une température comprise entre 300 et 500°C.

Les moyens de condensation de vapeur peuvent avantageusement comprendre une boîte de condensation à deux compartiments placés l'un audessus de l'autre et séparés par une paroi intermédiaire ajourée, avec des moyens pour introduire de l'eau dans le compartiment inférieur et pour régler son niveau à un niveau prédéterminé. Le compartiment supérieur comprend l'orifice de raccordement à la canalisation de conduction d'excès de vapeur, et contient des éléments ayant une inertie thermique et formant des chicanes, par exemple un empilement de pierres volcaniques. Le compartiment inférieur comprend un siphon raccordé à la canalisation d'écoulement et adapté pour écouler le trop plein de liquide au-delà du niveau prédéterminé. On prévoit des moyens pour amener et asperger de l'eau froide sur les pierres à des périodes déterminées pour les refroidir.

D'autres objets, caractéristiques et avantages de la présente invention ressortiront de la description suivante de modes de réalisation particuliers, faite en relation avec les figures jointes, parmi lesquelles:
- la figure 1 illustre, en vue de côté droit, les principaux organes d'un four selon la présente invention muni d'un dispositif d'évacuation d'excès de vapeur ;
- la figure 2 illustre, en vue d'arrière, le four de la figure 1 ;
- la figure 3 est une vue de dessus du four de la figure 2 ;
- la figure 4 est une vue de côté droit d'un four selon un second mode de réalisation de la présente invention ;
- la figure 5 est une vue d'arrière du four de la figure 4 ; et
- la figure 6 est une vue d'arrière d'un four selon un troisième mode de réalisation de la présente invention.

Dans les modes de réalisation illustrés sur les figures, un four à vapeur selon l'invention comprend une enceinte étanche 1, munie d'une ouverture obturée par une porte frontale 100 schématiquement représentée. Un dispositif de génération de vapeur d'eau 2 permet de produire de la vapeur d'eau et de l'amener dans l'enceinte étanche 1 par des canalisations d'amenée de vapeur non représentées.

Le dispositif de génération de vapeur d'eau comprend, par exemple, une enceinte principale 3 de production de vapeur d'eau, communiquant avec une enceinte secondaire 4 de régulation du niveau d'eau dans le générateur. Les portions inférieures des deux enceintes 3 et 4 communiquent par une canalisation inférieure 5 avec une pompe de vidange 6 du générateur de vapeur. La pompe de vidange 6 du générateur de vapeur est disposée dans la zone inférieure du four, et reflue dans une canalisation de vidange 7 formant une demi-boucle dont le sommet est dans la zone supérieure du four et dont l'extrémité 8 est raccordée à des canalisations d'écoulement 9 par un raccord 10. Le raccord 10 est non étanche, constitué par exemple d'un entonnoir dans lequel se déverse le liquide sortant de l'extrémité 8 de la canalisation de vidange 7.

La présente invention permet l'utilisation d'un raccord 10 non étanche, dans la mesure où les quantités de vapeur d'eau qui s'échappent par la canalisation de vidange 7 sont imperceptibles.

Pour cela, le four selon l'invention comprend un circuit de conduction d'excès de vapeur comportant au moins un orifice, ménagé dans la paroi de l'enceinte étanche 1, et raccordé à une canalisation de conduction d'excès de vapeur pour conduire l'excès de vapeur jusqu'à un orifice de raccordement ménagé dans une boîte de condensation 14 placée dans la zone inférieure du four et contenant de l'eau maintenue à un niveau prédéterminé 18.

Selon l'invention, on prévoit avantageusement des moyens distincts pour recueillir l'eau condensée et pour recueillir et traiter l'excès de vapeur. Pour cela, on prévoit un orifice inférieur 31 ménagé dans un réceptacle 30 en partie inférieure de l'enceinte 1 pour recueillir l'eau condensée s'écoulant en partie basse d'enceinte. L'orifice inférieur 31 est raccordé à une canalisation de conduction 170 pour conduire l'eau condensée jusqu'à un orifice de raccordement 32 ménagé dans la boîte de condensation 14. Outre l'orifice inférieur 31 recueillant l'eau condensée, on prévoit un orifice supérieur 11 raccordé à une canalisation de conduction d'excès de vapeur 12 conduisant l'excès de vapeur jusqu'à un orifice de raccordement 13 de la boîte de condensation 14. La canalisation de conduction d'excès de vapeur 12 doit avoir une section transversale importante, par exemple un diamètre intérieur compris entre 3 et 10 centimètres.

La boîte de condensation 14 des modes de réalisation représentés comprend deux compartiments 15 et 16, placés l'un au-dessus de l'autre et séparés par une paroi intermédiaire 17 ajourée.

Le compartiment inférieur 16 est associé à des moyens d'alimentation en eau, non représentés, adaptés pour introduire de l'eau dans le compartiment inférieur 16 et pour régler le niveau de l'eau à un niveau prédéterminé illustré par le trait mixte 18. On peut avantageusement prévoir d'introduire de l'eau dans le compartiment inférieur 16 à chaque injection d'eau dans le générateur de vapeur 2. On peut utiliser pour cela une canalisation de dérivation provenant de l'alimentation en eau du générateur de vapeur 2.

Le compartiment supérieur 15 comprend l'orifice de raccordement 13 pour le raccordement à la canalisation de conduction d'excès de vapeur 12. Ce compartiment supérieur 15, destiné à condenser la vapeur, contient des éléments présentant une inertie thermique et formant chicanes. Selon un mode de réalisation avantageux, le compartiment supérieur 15 contient des pierres 19, constituées par exemple d'une roche volcanique poreuse.

Une électrovanne 20 et une canalisation d'amenée d'eau 21 permettent d'amener et d'asperger de l'eau froide sur les pierres 19 à des périodes déterminées, pour les refroidir. Par exemple, on amène de l'eau froide sur les pierres 19 à chaque introduction d'eau dans le générateur de vapeur 2, en prévoyant une canalisation de dérivation appropriée provenant de l'alimentation en eau du générateur de vapeur 2.

Selon l'invention, on prévoit en outre des moyens pour séparer les liquides et la partie de vapeur non condensée qui sortent de la boîte de condensation 14. Pour cela, le compartiment inférieur 16 comprend un siphon 22 raccordé à la canalisation de vidange 7 et adapté pour écouler le trop plein de liquide et les condensats au-delà du niveau prédéterminé 18. Par exemple, le siphon 22 de sortie de condensats est constitué d'un tube coudé, dont l'orifice d'entrée 23 est orienté vers le bas et situé à un niveau inférieur au niveau prédéterminé 18 et proche du fond 160 du compartiment inférieur 16, sa seconde extrémité étant raccordée horizontalement à la canalisation d'écoulement 7, et la partie basse de son coude étant située au niveau prédéterminé 18.

Comme représenté sur les figures, la boîte de condensation 14 peut avantageusement comprendre une chambre auxiliaire 24, délimitée par une paroi verticale 25 descendant depuis la paroi supérieure de la boîte de condensation 14 jusqu'au dessous du niveau prédéterminé 18, l'espace au-dessous de la paroi 25 constituant un passage pour les liquides et pour la vapeur qui le traversent. Le siphon 22 est situé dans la chambre auxiliaire 24, comme illustré sur les figures, et son orifice d'entrée 23 est avantageusement plus bas que le bord inférieur de la paroi 25.

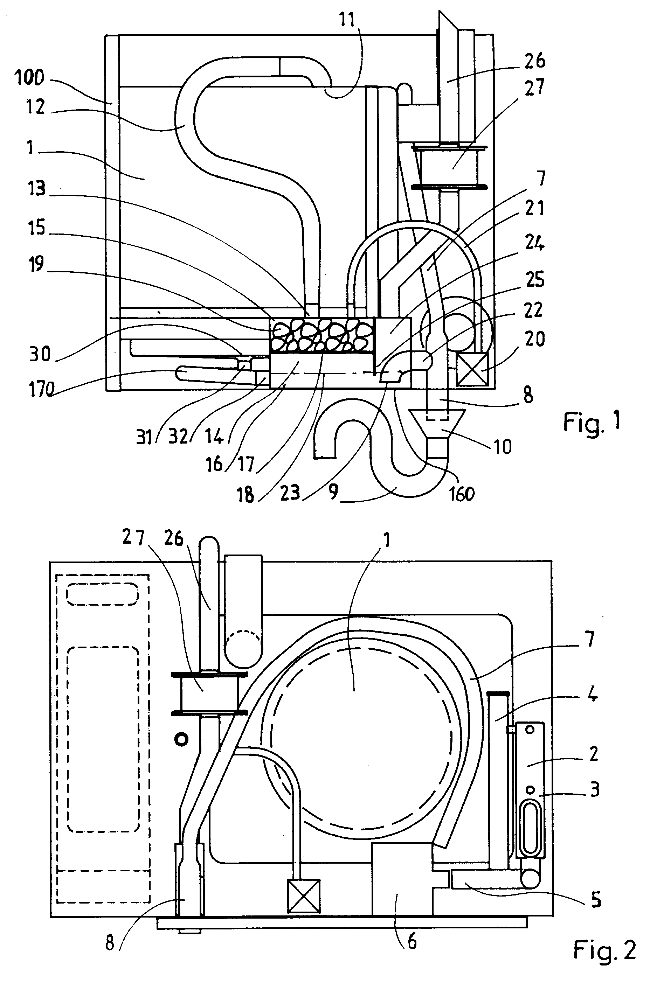

Dans le mode de réalisation représenté sur la figure 1, la zone supérieure de la chambre auxiliaire 24 est raccordée à une canalisation d'évacuation de vapeur 26 adaptée pour évacuer dans l'atmosphère la partie d'excès de vapeur qui a pu traverser la boîte de condensation 14 sans être condensée. La canalisation d'évacuation de vapeur 26 comprend avantageusement un surchauffeur 27. Le surchauffeur 27 est adapté pour assurer un échauffement important de la vapeur traversant la canalisation d'évacuation de vapeur 26, séparant les molécules d'eau, et détruisant simultanément les graisses et autres substances véhiculées par la vapeur. On constate que l'on supprime totalement la condensation de vapeur dans le local où se trouve le four.

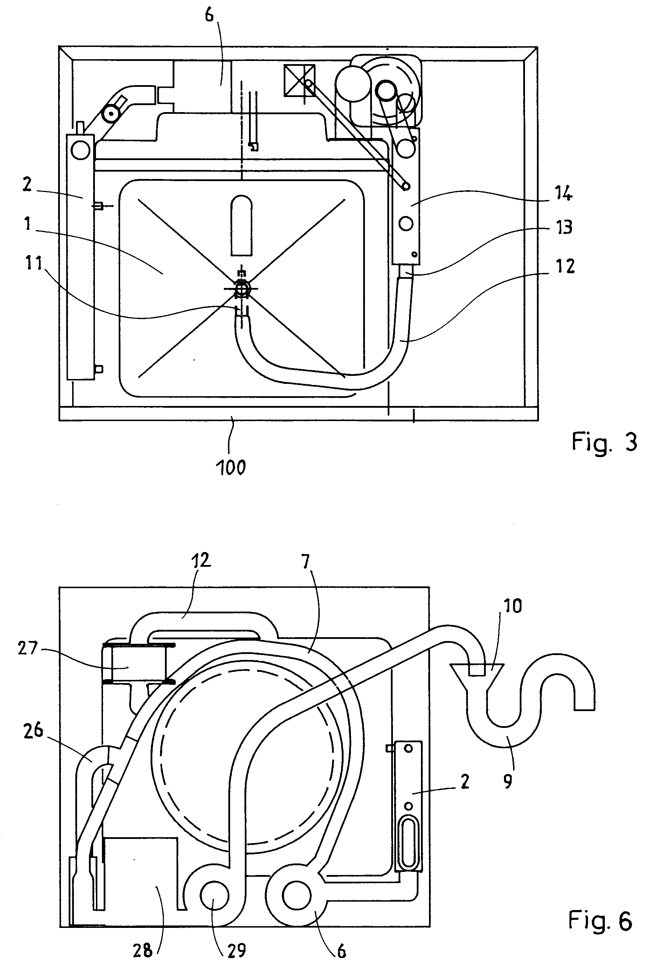

Dans le mode de réalisation des figures 1 à 3, le surchauffeur 27 est placé, dans le circuit de conduction d'excès de vapeur, en aval de la boîte de condensation 14 dans le sens d'écoulement de la vapeur. Ce mode de réalisation peut être préféré dans le cas où l'on admet une sortie de vapeur dans l'atmosphère ambiante.

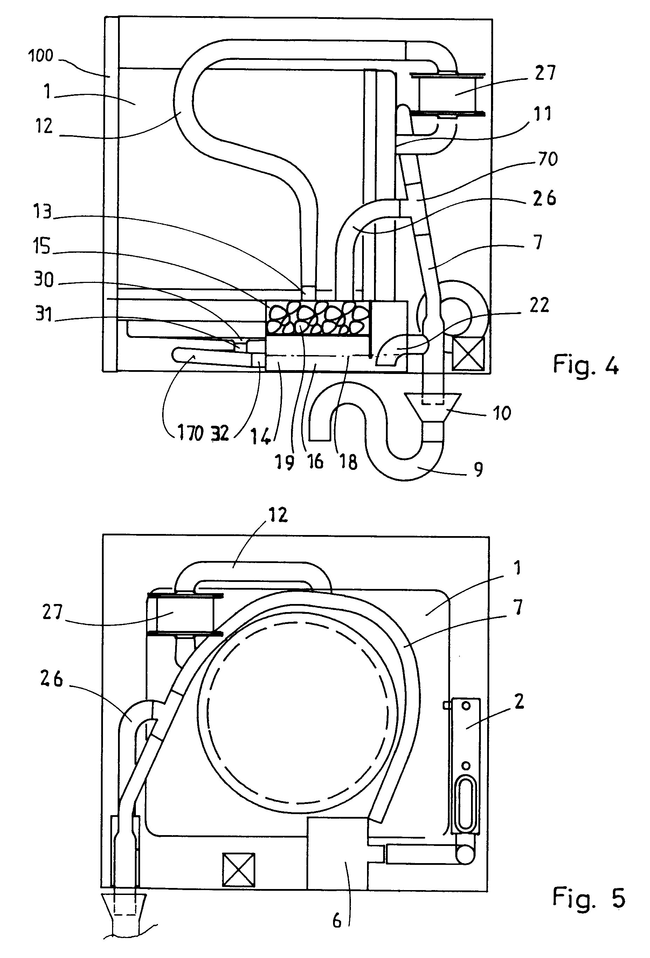

Par contre, dans le mode de réalisation des figures 4 et 5 un surchauffeur 27 est placé, dans le circuit de conduction d'excès de vapeur, en amont des moyens de condensation de vapeur. Ce mode de réalisation peut être préféré dans le cas où l'on n'admet aucune sortie de vapeur dans l'atmosphère ambiante.

Dans ce second mode de réalisation, on retrouve la canalisation de conduction d'excès de vapeur 12 conduisant la vapeur depuis un orifice supérieur 11 jusqu'à un orifice de raccordement 13 ménagé dans la boîte de condensation 14. Un surchauffeur 27 est interposé dans cette canalisation de conduction d'excès de vapeur 12. La boîte de condensation 14 contient également de l'eau dans son compartiment inférieur 16, jusqu'au niveau prédéterminé 18, tandis que son compartiment supérieur 15 contient des pierres 19. Le siphon 22 de sortie de condensats raccorde le compartiment inférieur 16 à la canalisation de vidange 7 elle-même raccordée à la canalisation d'écoulement 9, comme dans le mode de réalisation précédent.

Une canalisation d'évacuation de vapeur 26 est raccordée, par sa première extrémité, à un orifice de la paroi supérieure du premier compartiment 15 de boîte de condensation 14, et, par sa seconde extrémité, à une zone intermédiaire 70 de la canalisation de vidange 7. La zone intermédiaire 70 est avantageusement à un niveau plus élevé que le raccordement du siphon 22. Il n'y a pas de sortie de vapeur dans l'atmosphère. De façon étonnante, la présence du surchauffeur 27 réduit à la fois la quantité de vapeur qui traverse la boîte de condensation 14, et l'échauffement de la boîte de condensation 14 elle-même et de l'eau qu'elle contient.

Dans les modes de réalisation précédents, l'eau de vidange du générateur de vapeur est refluée, en fin de cuisson, dans la canalisation de vidange 7 par la pompe de vidange 6 de générateur de vapeur. Par le fait que la canalisation de vidange 7 est raccordée d'une part au conduit de sortie de condensats constitué par le siphon 22, et d'autre part à la canalisation d'évacuation de vapeur, le flux d'eau de vidange aspire par le siphon 22 l'eau et les condensats présents dans la boîte de condensation 14.

La figure 6 illustre un autre mode de réalisation d'un tel four. Dans ce mode de réalisation, la pompe de vidange 6 permettant de vidanger le contenu du générateur de vapeur 2 refoule dans la canalisation de vidange 7 qui amène l'eau dans un réservoir de sortie 28 lui-même raccordé aux canalisations d'écoulement 9 par une seconde pompe de vidange 29 permettant une sortie dans les canalisations d'écoulement 9 à un niveau plus élevé que le four. La canalisation de vidange 7 est raccordée d'une part au siphon de sortie des condensats, non représenté, et d'autre part à la canalisation d'évacuation de vapeur 26. Ce mode de réalisation permet de placer le four au-dessous du niveau d'évacuation dans les canalisations d'écoulement 9, tout en utilisant un orifice 10 en forme d'entonnoir.

Dans un mode de réalisation simplifié, la boîte de condensation 14 peut comprendre un seul compartiment contenant de l'eau froide que l'on amène à des périodes déterminées, pour la refroidir. La vapeur non condensée est ensuite extraite de la boîte de condensation 14 par une canalisation d'évacuation de vapeur 26 munie d'un surchauffeur 27.

Dans tous les modes de réalisation précédemment décrits, le surchauffeur 27 peut être constitué d'une enceinte contenant des moyens de résistance électrique et des moyens favorisant l'échange de chaleur avec la vapeur. La température à l'intérieur du surchauffeur peut avantageusement atteindre 300 à 500°C. On a obtenu de bons résultats en utilisant par exemple un empilement de pierres volcaniques poreuses chauffées par les moyens de résistance électrique et traversé par la vapeur.

Selon une autre variante, la boîte de condensation 14 peut être un échangeur de chaleur, transmettant au générateur de vapeur l'énergie calorifique prélevée sur la vapeur en cours de condensation.

La présente invention n'est pas limitée aux modes de réalisation qui ont été explicitement décrits, mais elle en inclut les diverses variantes et généralisations contenues dans le domaine des revendications ci-après.

## Revendications

1. Four pour la cuisson d'aliments, comprenant une enceinte étanche (1) munie d'une ouverture obturée par une porte (100), avec un circuit de captage d'eau condensée (31, 170, 32, 14, 22) comportant un orifice inférieur (31) pour recueillir en partie basse de l'enceinte (1) l'eau qui se condense dans l'enceinte et pour l'évacuer par une canalisation de conduction (170) dans des canalisations d'écoulement (9), un circuit de conduction d'excès de vapeur (11, 12) pour capter l'excès de vapeur sortant de l'enceinte (1) et pour amener la vapeur captée jusqu'à des moyens de traitement comportant des moyens de condensation de vapeur (14) contenant de l'eau à un niveau prédéterminé (18) pour transformer la vapeur en condensats liquides, des moyens (22, 7) pour recueillir les condensats liquides et pour les évacuer dans les canalisations d'écoulement (9),
caractérisé en ce que :
- les moyens pour recueillir et traiter l'excès de vapeur (11, 12, 14, 22) sont distincts des moyens pour recueillir l'eau condensée (31, 170, 32, 14, 22), et comprennent un orifice supérieur (11) ménagé en partie supérieure d'enceinte (1) et raccordé à une canalisation de conduction d'excès de vapeur (12) pour conduire l'excès de vapeur prélevé en partie supérieure d'enceinte jusqu'à un orifice de raccordement (13) ménagé dans les moyens de condensation de vapeur (14) placés dans la zone inférieure du four,
- les moyens de traitement (11, 12, 14, 22) comportent en outre au moins un surchauffeur (27), adapté pour assurer un échauffement important de la vapeur qui le traverse, et placé dans le circuit de conduction d'excès de vapeur en amont ou en aval des moyens de condensation de vapeur (14).

2. Four selon la revendication 1, caractérisé en ce que le surchauffeur (27) est adapté pour chauffer la vapeur qui le traverse à une température comprise entre 300 et 500°C environ.

3. Four selon l'une des revendications 1 ou 2, caractérisé en ce que les moyens de condensation de vapeur comprennent une boîte de condensation (14) à deux compartiments (15, 16) placés l'un au dessus de l'autre et séparés par une paroi intermédiaire (17) ajourée, avec des moyens pour introduire de l'eau dans le compartiment inférieur (16) et pour régler son niveau au niveau prédéterminé (18).

4. Four selon la revendication 3, caractérisé en ce que le compartiment supérieur (15) de boîte de condensation (14) comprend l'orifice de raccordement (13) à la canalisation de conduction d'excès de vapeur (12) et contient des pierres (19).

5. Four selon l'une quelconque des revendications 2 à 4, caractérisé en ce que la boîte de condensation (14) comprend un siphon (22) raccordé à la canalisation de vidange (7) et adapté pour écouler le trop plein de liquide au-delà du niveau prédéterminé (18), l'entrée (23) du siphon (22) étant orientée vers le bas et située à un niveau inférieur au niveau prédéterminé (18) et proche du fond (160) du compartiment inférieur (16).

6. Four selon l'une des revendications 4 ou 5, caractérisé en ce qu'il comprend des moyens (20, 21) pour amener de l'eau froide dans la boîte de condensation (14) à des périodes déterminées, pour la refroidir.

7. Four selon l'une quelconque des revendications 1 à 6, caractérisé en ce que la boîte de condensation (14) est raccordée à une canalisation d'évacuation de vapeur (26) pour évacuer dans l'atmosphère la partie d'excès de vapeur non condensée dans la boîte de condensation (14).

8. Four selon l'une quelconque des revendications 1 à 7, caractérisé en ce que la canalisation de conduction d'excès de vapeur (12) comprend un surchauffeur (27).

9. Four selon la revendication 7, caractérisé en ce que la canalisation d'évacuation de vapeur (26) comprend un surchauffeur (27).

10. Four selon l'une quelconque des revendications 1 à 9, caractérisé en ce qu'il comprend un dispositif de génération de vapeur d'eau (2), une pompe de vidange (6) et des canalisations de vidange (7) adaptées pour vidanger l'eau contenue dans le dispositif de génération de vapeur d'eau (2) et pour l'amener dans les canalisations d'écoulement (9), les canalisations de vidange (7) étant raccordées d'une part à un conduit de sortie de condensats (22) de façon à aspirer le contenu des moyens de condensation de vapeur (14) lors de la vidange.

11. Four selon l'une quelconque des revendications 1 à 9, caractérisé en ce qu'il comprend un dispositif de génération de vapeur d'eau (2), une première pompe de vidange (6) et des canalisations de vidange (7) adaptées pour vidanger l'eau contenue dans le dispositif de génération de vapeur d'eau (2) et pour l'amener dans un réservoir de sortie (28) lui-même raccordé aux canalisations d'écoulement (9) par une seconde pompe de vidange (29) permettant une sortie dans les canalisations d'écoulement (9) à un niveau plus élevé que le four, les canalisations de vidange (7) étant raccordées d'une part à un conduit de sortie de condensats (22) de façon à aspirer le contenu des moyens de condensation de vapeur (14) lors de la vidange.

## Claims

1. Oven for cooking foodstuffs including an airtight enclosure (1) having an opening closed by a door (100), with a condensed water capture circuit (31, 170, 32, 14, 22) having a lower hole (31) for collecting in the lower part of said enclosure (1) water condensing in said enclosure and for discharging same through a conduction pipe (170) into discharge pipes (9), an excess steam circuit (11, 12) for capturing excess steam escaping from said enclosure (1) and for feeding the captured steam to treatment means including steam condenser means (14) containing water at a predetermined level (18) to convert steam into liquid condensates, means (22, 7) for collecting said liquid condensates and for removing them through discharge pipes (9),
characterised in that :
- said means for collecting and treating excess steam (11, 12, 14, 22) are separate from means for collecting condensed water (31, 170, 32, 14, 22), and include an upper orifice (11) in an upper part of said enclosure (1) and connected to an excess steam pipe (12) to convey excess steam collected from an upper part of said enclosure to a connection orifice (13) in steam condensation means (14) in the lower part of the oven,
- said treatment means (11, 12, 14, 22) include at least one heater (27), adapted to heat steam passing through it, and set in the excess steam circuit on the upstream side or on the downstream side of the steam condenser means (14).

2. Oven according to claim 1, characterised in that said heater (27) is adapted to heat steam passing through it to a temperature between approximately 300°C and 500°C.

3. Oven according to claim 1 or 2, characterised in that said steam condenser means include a condensation box (14) with two compartments (15, 16) one on top of the other and separated by an apertured intermediate wall (17) with means for feeding water into the lower compartment (16) and for maintaining it at the predetermined level (18).

4. Oven according to claim 3, characterised in that the upper compartment (15) of said condensation box (14) includes said orifice (13) for connection to said excess steam pipe (12) and contains rocks (19).

5. Oven according to any of claims 2 to 4, characterised in that said condensation box (14) includes a siphon (22) connected to said drain pipe (7) and adapted to carry away excess liquid above said predetermined level (18), the inlet (23) of said siphon (22) facing downwards and being at a level lower than said predetermined level (18) and near the bottom (160) of said lower compartment (16).

6. Oven according to any of claims 4 or 5, characterised in that it comprises means (20, 21) for feeding cold water into said condensation box (14) at predetermined periods to cool it.

7. Oven according to any of claims 1 to 6, characterised in that said condensation box (14) is connected to a steam outlet pipe (26) to vent to atmosphere excess steam not condensed in said condensation box (14).

8. Oven according to any of claims 1 to 7, characterised in that said steam pipe (12) includes a heater (27).

9. Oven according to claim 7, characterised in that said steam outlet pipe (26) includes a heater (27).

10. Oven according to any of claims 1 to 9, characterised in that it includes a steam generator device (2), a drain pump (6) and drain pipes (7) adapted to drain off water contained in said steam generator device (2) and to feed it into said discharge pipes (9), said drain pipes (7) being connected to a condensate outlet pipe (22) to aspirate the content of said steam condenser means (14) during draining.

11. Oven according to any of claims 1 to 9, characterised in that it includes a steam generator device (2), a first drain pump (6) and drain pipes (7) adapted to drain off water from said steam generator device (2) and to feed it into an outlet storage tank (28) connected to said discharge pipes (9) by a second drain pump (29) enabling output into discharge pipes (9) at a higher level than the oven, said drain pipes (7) being connected to a condensate outlet pipe (22) to aspirate the content of said steam condenser means (14) during draining.

## Patentansprüche

1. Ofen für die Nahrungsmittelküche, der eine enge Einfassung (1) aufweist, welche mit einer durch eine Tür (100) verschlossenen Öffnung versehen ist, mit einem Kreislauf zur Aufnahme von kondensiertem Wasser (31, 170, 32, 14, 22), der eine untere Öffnung (31) zum Einsammeln an einem tiefer gelegenen Bereich der Einfassung (1) des Wassers aufweist, das sich in der Einfassung kondensiert, und zu dessen Entleerung über eine Leitungskanalisation (170) in Ablaufkanalisationen (9), einem Leitungskreislauf für einen Dampfüberschuß (11, 12) zur Aufnahme des Dampfüberschusses, der aus der Einfassung (1) austritt, und zur Zuleitung des aufgenommenen Dampfes bis hin zu Behandlungsmitteln, welche Dampfkondensationsmittel (14) aufweisen, die Wasser bei einem vorbestimmten Niveau (18) enthalten, um den Dampf in flüssige Kondensate umzuwandeln, und Mitteln (22, 7) zum Einsammeln der flüssigen Kondensate und zu ihrer Entleerung in die Ablaufkanalisationen (9),
dadurch gekennzeichnet, daß
- die Mittel zum Einsammeln und Behandeln des Dampfüberschusses (11, 12, 14, 22) verschieden sind von den Mitteln zum Einsammeln des kondensierten Wassers (31, 170, 32, 14, 22) und eine obere Öffnung (11) aufweisen, die im oberen Bereich der Einfassung (1) vorgesehen und mit einer Leitungskanalisation für einen Dampfüberschuß (12) versehen ist, um den Dampfüberschuß, der in dem oberen Bereich der Einfassung entnommen wurde, bis hin zu einer Anschlußöffnung (13) zu leiten, die in den Dampfkondensationsmitteln (14) vorgesehen ist, welche in der unteren Zone des Ofens angeordnet sind,
- die Behandlungsmittel (11, 12, 14, 22) außerdem wenigstens einen Überhitzer (27) aufweisen, der zur Sicherstellung einer wesentlichen Erhitzung des Dampfes angepaßt ist, der durch ihn hindurchgeht, und der in dem Leitungskreislauf für den Dampfüberschuß stromaufwärts oder stromabwärts von den Dampfkondensationsmitteln (14) angeordnet ist.

2. Ofen nach Anspruch 1, dadurch gekennzeichnet, daß der Überhitzer (27) für ein Erhitzen des durch ihn hindurchgehenden Dampfes auf eine Temperatur angepaßt ist, die zwischen etwa 300 und 500°C liegt.

3. Ofen nach einem der Ansprüche 1 oder 2, dadurch gekennzeichnet, daß die Dampfkondensationsmittel ein Kondensationsgehäuse (14) mit zwei Fächern (15, 16) aufweisen, die übereinander angeordnet und durch eine gelochte Zwischenwand (17) voneinander getrennt sind, mit Mitteln zur Zuleitung von Wasser in das untere Fach (16) und zum Regeln seines Pegels auf das vorbestimmte Niveau (18).

4. Ofen nach Anspruch 3, dadurch gekennzeichnet, daß das obere Fach (15) des Kondensationsgehäuses (14) die Anschlußöffnung (13) an die Leitungskanalisation für den Dampfüberschuß (12) aufweist und Steine (19) enthält.

5. Ofen nach einem der Ansprüche 2 bis 4, dadurch gekennzeichnet, daß das Kondensationsgehäuse (14) einen Siphon (22) aufweist, der an die Entleerungskanalisation (7) angeschlossen und zur Entleerung von zuvieler Flüssigkeit über das vorbestimmte Niveau (18) hinaus angepaßt ist, wobei der Eingang (23) des Siphons (22) nach unten ausgerichtet und bei einem Niveau tiefer als das vorbestimmte Niveau (18) und nahe dem Boden (160) des unteren Faches (16) angeordnet ist.

6. Ofen nach einem der Ansprüche 4 oder 5, dadurch gekennzeichnet, daß er Mittel (20, 21) zur Zuleitung von kaltem Wasser in das Kondensationsgehäuse (14) zu bestimmten Zeiten aufweist, um es zu kühlen.

7. Ofen nach einem der Ansprüche 1 bis 6, dadurch gekennzeichnet, daß das Kondensationsgehäuse (14) an eine Dampfentleerungskanalisation (26) angeschlossen ist, um den in dem Kondensationsgehäuse (14) nicht kondensierten Teil des Dampfüberschusses in die Atmosphäre abzuführen.

8. Ofen nach einem der Ansprüche 1 bis 7, dadurch gekennzeichnet, daß die Leitungskanalisation für den Dampfüberschuß (12) einen Überhitzer (27) aufweist.

9. Ofen nach Anspruch 7, dadurch gekennzeichnet, daß die Dampfentleerungskanalisation (26) einen Überhitzer (27) aufweist.

10. Ofen nach einem der Ansprüche 1 bis 9, dadurch gekennzeichnet, daß er eine Vorrichtung zur Erzeugung von Wasserdampf (2), eine Entleerungspumpe (6) und Entleerungskanalisationen (7) aufweist, die für ein Entleeren des in der Vorrichtung zur Erzeugung von Wasserdampf (2) enthaltenen Wassers angepaßt sind und für seine Zuleitung in die Ablaufkanalisationen (9), wobei die Entleerungskanalisationen (7) mit einem Teil an eine Austrittsleitung für Kondensate (22) angeschlossen sind, um den Inhalt der Dampfkondensationsmittel (14) anläßlich der Entleerung abzuführen.

11. Ofen nach einem der Ansprüche 1 bis 9, dadurch gekennzeichnet, daß er eine Vorrichtung zur Erzeugung von Wasserdampf (2) aufweist, eine erste Entleerungspumpe (6) und Entleerungskanalisationen (7), die für ein Entleeren des in der Vorrichtung zur Erzeugung von Wasserdampf (2) enthaltenen Wassers angepaßt sind und für seine Zuleitung an einen Austrittsspeicher (28), der seinerseits an die Ablaufkanalisationen (9) durch eine zweite Entleerungspumpe (29) angeschlossen ist, um einen Austritt in die Ablaufkanalisationen (9) bei einem Niveau höher als der Ofen zu erlauben, wobei die Entleerungskanalisationen (7) mit einem Teil an eine Austrittsleitung für Kondensate (22) angeschlossen sind, um den Inhalt der Dampfkondensationsmittel (14) anläßlich der Entleerung abzuführen.
